# EUROPEAN PATENT SPECIFICATION

(11) **EP 1 738 598 B1**
(45) Date of publication and mention of the grant of the patent: **20.02.2008**
(21) Application number: 04795857.4
(22) Date of filing: 21.10.2004
(51) Int. Cl.: H04Q 7/22

(54) **HANDS-FREE REMINDER FOR A WIRELESS COMMUNICATIONS TERMINAL**
FREIHAND-GEDÄCHTNISHILFE FÜR EIN DRAHTLOSES KOMMUNIKATIONSGERÄT
RAPPEL D'OBLIGATION D'UTILISER LA FONCTION MAINS LIBRES POUR TERMINAL DE COMMUNICATION SANS FIL

(30) Priority: 22.04.2004 US 829637
(43) Date of publication of application: 03.01.2007
(73) Proprietor: Sony Ericsson Mobile Communications AB, 221 88 Lund (SE)
(72) Inventor: BEDNASZ, Kenneth, Raleigh, NC 27616 (US)
(74) Representative: HOFFMANN EITLE
(86) International application number: PCT/US2004/034751
(87) International publication number: WO 2005/109924

(56) References cited:
- US-A1- 2002 016 169
- US-A1- 2002 086 680
- US-A1- 2003 006 912
- US-A1- 2003 008 661
- US-A1- 2003 032 434

## Description

### BACKGROUND

The present invention relates generally to wireless communications devices, and particularly to wireless communications devices configured to use a hands-free device.

in many areas of the country, such as New York State, it is illegal to converse on a cellular telephone while driving a vehicle unless the driver employs some sort of hands-free device. Those drivers caught conversing over the cellular phone without the use of a hands-free device face stiff monetary penalties. Of course, cellular users living in these "hands-free" jurisdictions are well aware of the laws and can therefore act accordingly. However, those that may be passing through these jurisdictions may never know of the ordinance until they receive a summons from law enforcement. Currently, neither the cellular telephone manufacturers nor the service carriers implement programs that adequately encourage drivers to utilize hands-free devices. Further, not every driver is aware of the geographical locations of every hands-free jurisdiction in the country, and the local ordinances are subject to change without notice. Therefore, what drivers need is a system and method that indicates whether they are in or near these hands-free jurisdictions.
US 2003/0032434 discloses a mobile terminal that activates and deactivates a hands-free mode based on the proximity of the mobile terminal to a hands-free only zone. However, this document does not consider the velocity of the mobile terminal in deciding whether to activate or deactivate the hands-free only mode.
US 2002/0086680 discloses a system that allows user to set alerts to their mobile terminals. The alerts are triggered based on the location of the mobile terminal, however, this document does not activate/deactivate a hands-free only mode based on the proximity of the mobile terminal to a hands-free zone and on the velocity of the mobile terminal.
US 2003/008661 discloses delivering content to a mobile terminal based on the proximity of the mobile terminal to a pre-defined area. This document does not disclose, however, activating/deactivating a hands-free only mode in the mobile terminal based on the proximity of the mobile terminal to a hands-free zone and on the velocity of the mobile terminal.

### SUMMARY

The present invention relates to a wireless communications device that indicates whether the device is proximate a geographical area requiring the use of a hands-free device while driving a vehicle. These geographical areas are typically defined by predetermined boundaries or locations, and are referred to herein as "hands-free zones."

The wireless device includes a transceiver to communicate with a base station in a wireless communications network and a controller. The wireless device may also comprise a GPS receiver. A current location of the wireless device may be determined using the GPS receiver, or from signals transmitted by the wireless network. Location information associated with the hands-free zone is stored in the wireless device or in the network. An indication, for example a visual indication, an audible indication, or a text message, alerts the user of the wireless device if the wireless device is proximate the hands-free zone. As used herein, the term "proximate" means in or near the hands-free zone. Additionally, the controller may be configured to automatically enable/disable a hands-free only mode of operation on the wireless device upon entering/leaving the hands-free zone, respectively.

### BRIEF DESCRIPTION OF THE DRAWINGS

Figure 1 illustrates a block diagram of a wireless communications device according to one embodiment of the present invention.

Figure 2 illustrates a possible wireless communications network according to one embodiment of the present invention.

Figure 3 illustrates one possible method according to one embodiment of the present invention.

Figure 4 illustrates pictorially how one embodiment of the present invention operates when a mobile terminal travels in and out of a hands-free zone.

### DETAILED DESCRIPTION

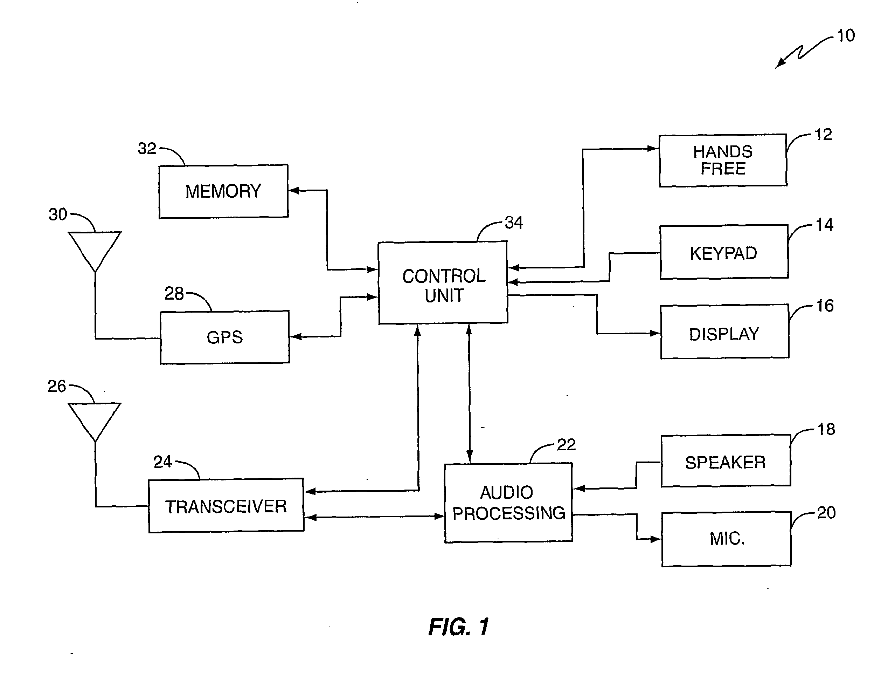

Referring now to the drawings, Figure 1 illustrates a block diagram of a wireless communications device according to one embodiment of the present invention, and is indicated generally by the number 10. The device of Figure 1 represents a mobile terminal 10. For example, in one embodiment, mobile terminal 10 is a cellular telephone. However, the present invention is not limited solely to use in cellular phones, but may be embodied in other wireless communication devices such as satellite telephones, personal communication services (PCS) devices, personal data assistants (PDAs), palm-top computers, and the like.

Mobile terminal 10 comprises a hands-free device 12, a keypad 14, a display 16, a speaker 18, a microphone 20, an audio processing circuit 22, a cellular transceiver 24 having an antenna 26, a GPS receiver 28 having an antenna 30, memory 32, and a controller 34. Hands-free device 12 may comprise a hands-free headset, for example, that allows a user to communicate with a remote party without having to hold mobile terminal 10. Typically, hands-free device 12 is a peripheral device having an adaptor that mates with mobile terminal 10 via a system interface connector (not shown) or a corresponding jack (not shown). Those skilled in the art will readily appreciate that a hands-free headset is but one possibility, and that hands-free device 12 might also encompass an external speakerphone or speaker system including a microphone that interfaces with mobile terminal 10 via a wireless interface such as BLUETOOTH. These types of hands-free devices may sit on a table or other flat surface, or may be vehicle mounted.

Keypad 14 and display 16 are part of a user interface disposed on a face of mobile terminal 10. Keypad 14 includes an alphanumeric keypad as well as other optional navigation controls, and allows users to dial numbers, enter commands, play games, and select options from various menus stored in memory 32. Display 16 displays information to the user including dialed digits, incoming caller identification, images, video sequences, call status information, menu options, text messages, and/or other service information. As will be described below in more detail, keypad 14 and/or display 16 may include backlighting to provide visual indications to the user.

Microphone 20 converts the user's speech into electrical audio signals, while speaker 18 converts audio signals into audible sounds for the user. Microphone 20 and speaker 18 send and receive signals to/from transceiver 24 via audio processing circuit 22. Transceiver 24 is coupled to an antenna 26, and is a fully functional cellular radio transceiver that operates according to standards well known in the art, including Global System for Mobile Communications (GSM), TIA/EIA-136, cdmaOne, cdma2000, UMTS, and Wideband CDMA.

Mobile terminal 10 may include or be otherwise associated with a GPS receiver 28. As is known in the art, GPS receiver 28 enables mobile terminal 10 to determine its location based on GPS signals received via antenna 30 from a plurality of GPS satellites orbiting the earth. These satellites include, for example, the U.S. Global Positioning System (GPS) or NAVSTAR satellites, as well as the Russian equivalent GLONASS satellite system. While GPS receiver 28 is shown in Figure 1 as a separate component, it should be understood that controller 34 might also function to compute the current location of mobile terminal 10 based on the signals received and output by GPS receiver 28.

Typically, the satellite signals include satellite-positioning data, called "ephemeris" data. Ephemeris data permits mobile terminal 10 to discern which satellites are visible to mobile terminal 10, as well as their orbital positions, from any given point on the earth. Because mobile terminal 10 knows the positions of several visible satellites, GPS receiver 28 is able to determine the location of mobile terminal 10 by computing the relative time of arrival of signals transmitted simultaneously from the satellites. The ephemeris data received by GPS receiver 28 may be stored in memory 32 on mobile terminal 10 and updated periodically. However, as is known in the art, updating ephemeris data via GPS receiver 28 is often a time consuming process. Therefore, mobile terminal 10 may alternatively receive ephemeris data updates stored at the wireless communications network.

Memory 32 represents the entire hierarchy of memory in mobile terminal 10, including both random access memory (RAM) and read-only memory (ROM). Memory 32 stores operating instructions and data required for operation of mobile terminal 10, temporary data and/or instructions necessary for various user applications, and as stated above, ephemeris data. Memory 32 includes devices such as EPROM, EEPROM, and/or flash memory, and may be implemented as a discrete device, stacked device, or integrated with controller 34.

Controller 34 may be implemented as one or more microprocessors, and may be any suitable microprocessor known in the art. This includes general purpose and special purpose microprocessors, as well as digital signal processors (DSPs). Controller 34 controls the operation of device 10 according to program instructions stored in memory 32, and generates signals to control various functionality of mobile terminal 10. For example, controller 34 may generate signals to display text messages received via transceiver 24, or render visual, tactile, and/or audible indications to the user. As will be described later in more detail, controller 34 is configurable to generate signals that alert a user when mobile terminal 10 is proximate (i.e., in or near) a hands-free zone. Additionally, controller 34 may be configured to place mobile terminal 10 into and out of a "hands-free only" mode of operation. In this mode, the user of mobile terminal 10 would only be able to communicate with remote parties when hands-free device 12 is used with mobile terminal 10.

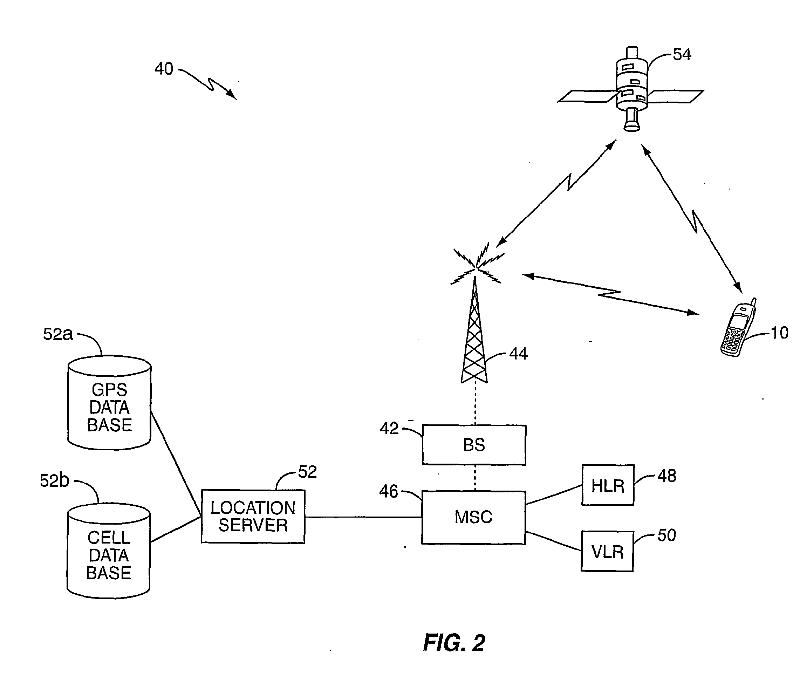

Figure 2 illustrates a typical arrangement of a wireless communications network 40 suitable for use with mobile terminal 10 of the present invention. Network 40 comprises one or more base stations (BS) 42 connected to a mobile switching center (MSC) 46. Each BS 42 may include one or more antennas 44, and provides cellular services to mobile terminal 10 over a specified geographic region known as a cell. BS 42 facilitates communications between the user of mobile terminal 10 and a remote party, and transmits control signals to mobile terminal 10. As described later in more detail, these signals may include, for example, ephemeris data updates or responses to location requests from mobile terminal 10. Additionally, these signals may include control signals that cause mobile terminal 10 to automatically enable/disable a hands-free only mode of operation.

MSC 46 routes calls to and from mobile terminal 10 through BS 42, and communicates with a Home Location Register (HLR) 48, a Visitors Location Register (VLR) 50, and a Location Server (LS) 52. HLR 48 and VLR 50 store information concerning the location and activity status of mobile terminal 10. As is known in the art, HLR 48 and VLR 50 may or may not be co-located with MSC 46, or may be integrated with MSC 46.

LS 52 typically serves a plurality of cells in addition to serving the cell covered by BS 42, and preferably includes a GPS database 52a and a cell database 52b. The GPS database 52a contains, for example, up-to-date ephemeris data received from the satellites 54 orbiting the earth. As stated above, BS 42 may periodically transmit the ephemeris data stored in GPS database 52a to mobile terminal 10 for storage in memory 32. Cell database 52b stores information regarding the location of the cells in the geographic area served by location server 52. This information might include, for example, coordinates defining the boundary of geographical areas identified as hands-free zones, or alternatively, the coordinates of base stations that serve the cells in the hands-free zones.

As previously stated, the present invention alerts the user if mobile terminal 10 is in or is entering the hands-free zone. To determine whether mobile terminal 10 is in or entering a hands-free zone, the present invention uses the current location of mobile terminal 10 and location information relating to the geographical area of the hands-free zone. The location information relating to the hands-free zone may be stored in memory 32 on mobile terminal 10, or may be stored on a server in network 40. Based on this determination, the present invention will indicate whether mobile terminal 10 is in or entering the hands-free zone to the user, and optionally control the functionality of mobile terminal 10.

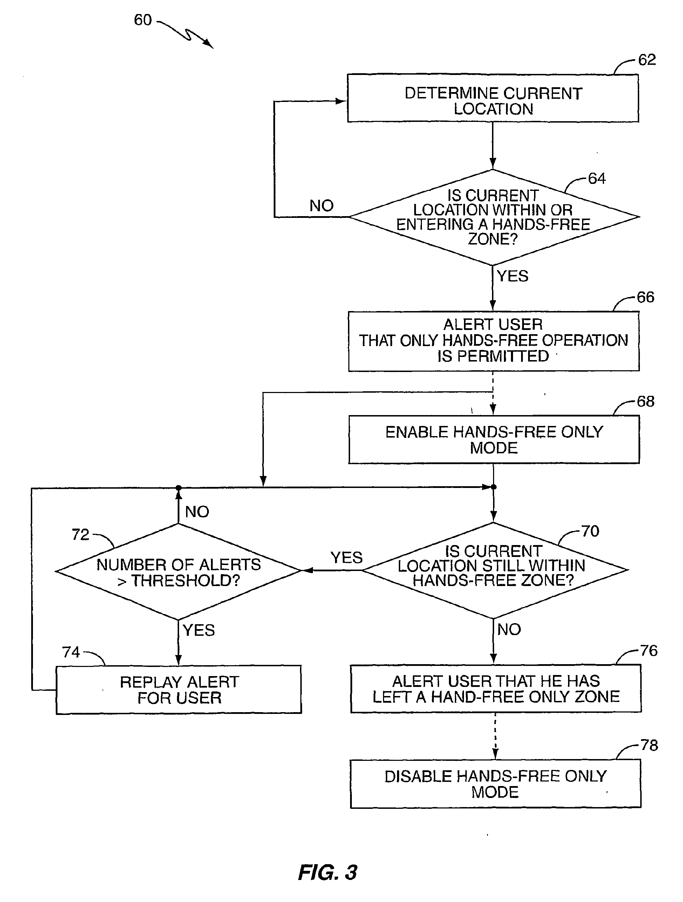

Figure 3 illustrates one method 60 according to one embodiment of the present invention. Method 60 begins by determining the current location of mobile terminal 10 (box 62). For example, mobile terminal 10 might periodically determine its current location using GPS receiver 28. In this case, GPS receiver 28 or controller 34 may determine the current location of mobile terminal 10 using methods known in the art. Alternatively, mobile terminal 10 could receive its current location from network 40. In this case, network 40 has the ability to determine the current location of mobile terminal 10 using assisted GPS methods, base station triangulation methods, time-of-arrival methods, and methods based on changes in received signal strength (RSSI). Further, network 40 and/or controller 34 may also be able to determine distance of mobile terminal 10 from a given base station 12, as well as its velocity and direction, using any of these methods. However, the present invention is not limited to the methods specifically mentioned herein, and may use any method known in the art to determine the location, distance, velocity, and direction of mobile terminal 10.

Once the current location of mobile terminal 10 is known, the present invention will determine if mobile terminal 10 lies within or near a hands-free zone (box 64). This may be done by controller 34 comparing the current location of mobile terminal 10 to location information stored in memory 32. This location information might include coordinates defining the hands-free zone boundaries, or might include the coordinates defining the specific locations of the base stations 42. Where the location information is stored cell database 52b, LS 52 may undertake the comparison, and generate a signal to mobile terminal 10 via base station 42. This signal may be sent over a control channel, for example, to mobile terminal 10 indicating that mobile terminal 10 has entered the hands-free zone.

If it is determined that mobile terminal 10 lies within or is near the hands-free zone, the user is alerted (box 66). Controller 34 may alert the user based on its own computations, or alternatively, in response to receipt of a signal received over a control channel from base station 42. Controller 34 may alert the user by causing, for example, an LED to light, causing the backlighting of keypad 14 and/or display 16 to flash, displaying a symbol or text message on display 16, rendering an audible beep or voice warning through speaker 18, activating a tactile generator, or any combination thereof. In cases where the user is currently on a call, controller 34 might render a tone or series of tones through speaker 18, similar to a call waiting tone.

It should be noted that the present invention is configured to determine whether the location of mobile terminal 10 is relatively static within the hands-free zone. That is, in addition to the current location of mobile terminal 10, distance, direction, and/or velocity may be considered to determine whether the user is traveling in a vehicle, or whether the user is in a restaurant or simply walking down the street. If these variables indicate that mobile terminal 10 is at a relative standstill or moving below some predetermined velocity, the present invention may not alert the user.

The present invention may also use the distance, direction, and/or velocity of mobile terminal 10 to determine whether mobile terminal 10 is entering or about to enter the hands-free zone. By way of example, if the current location of mobile terminal 10 is within a predetermined distance from the boundary of the hands-free zone, and the direction of travel and/or velocity is such that mobile terminal 10 will imminently enter the hands-free zone, controller 34 may alert the user. This may, of course, require tracking the current location of mobile terminal 10 over time.

Additionally, controller 34 may be configured to enable a hands-free only mode of operation when mobile terminal 10 is within, or is entering, the hands-free zone (box 68). In one embodiment, controller 34 may enable transceiver 24 to transmit/receive signals to/from the network 40 only if controller 34 detected a hands-free device 12 connected to mobile terminal 10. In an alternate embodiment, controller 34 might disable speaker 18 and microphone 20, and route all incoming and outgoing audio to the hands-free device 12. The user could override this functionality by disabling the hands-free only mode through a menu selection. This may permit passengers in vehicles, for example, to communicate without the use of hands-free device 12. In cases where there is an on-going call, controller 34 may delay enabling the hands-free only mode until the user terminated the call.

As mobile terminal 10 travels through the hands-free zone, controller 34 and/or network 40 periodically re-compute the current location of mobile terminal 10 (box 70). As long as mobile terminal 10 remains in the hands free zone, the alerts may be periodically replayed for the user. The present invention may only periodically replay the alert for the user by comparing a counter against a threshold (box 72). If the counter is less than the threshold, the counter may be incremented but the alert may not be replayed. The alerts may only be replayed if the counter were greater than the threshold (box 74). Other methods of throttling the frequency of repeat alerts may be used, such as by using a predetermined duration (e.g., once every minute).

Once it has been determined that the current location of mobile terminal 10 is no longer within the hands-free zone (box 70), the present invention will alert the user (box 76). Unlike the alerts indicating entry into the hands-free zone, this alert might be played once for the user. In addition, controller 34 may disable the hands-free only mode on mobile terminal 10 (box 78), but not during an on-going call.

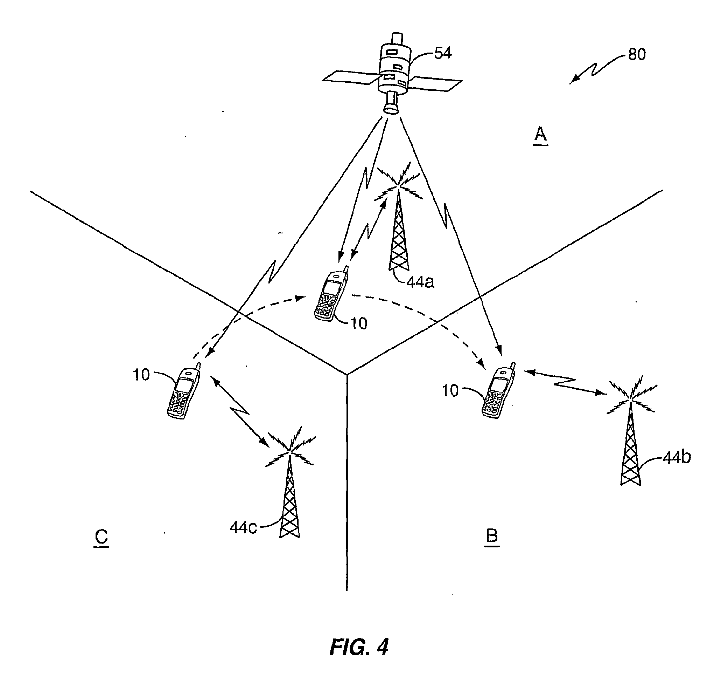

Figure 4 is a pictorial representation of mobile terminal 10 as it moves between jurisdictions. For illustrative purposes, mobile terminal 10 is a cellular phone traveling in a vehicle at sufficient velocity. In Figure 4, jurisdiction A is identified as a hands-free zone, while jurisdictions B and C are not. Each jurisdiction is served by one or more base stations 42 shown here as antennas 44a-44c. Beginning in jurisdiction C, mobile terminal 10 determines its current location using GPS receiver 28. Because memory 32 stores coordinates defining the boundaries of jurisdiction A, controller 34 determines that mobile terminal 10 is about to enter a hands-free zone. Controller 34 alerts the user accordingly, and enables the hands-free only mode of operation when mobile terminal 10 passes into jurisdiction A. The alerts may continue throughout the travels of mobile terminal 10 in jurisdiction A. When mobile terminal 10 leaves jurisdiction A to enter jurisdiction B, controller 34 alerts the user that he or she is leaving a hands-free jurisdiction, and disables the hands-free only mode of operation. Alternatively, mobile terminal 10 may receive its current location, and/or an indication that mobile terminal 10 is in or near the hands-free zone, from signals transmitted from antennas 44a-44c.

The present invention may be configurable such that a user may choose the type of alert, vary how often to repeat the alert, and whether to automatically enable/disable the hands-free only mode of operation. Further, the user may disable functionality of the present invention altogether to permit use within a hands-free zone without a hands-free device. This may allow the user to use mobile terminal 10 normally if, for example, the user's vehicle became disabled.

The present invention may also be configured to alert the user and/or enable/disable the hands free only mode in situations other than those specifically described above. In an alternate embodiment, for example, the present invention is configured to alert the user of mobile terminal 10 whenever the user attempts to use mobile terminal 10 to place or receive a call while traveling within the hands-free jurisdiction. In this embodiment, the present invention may periodically determine the location and the velocity of mobile terminal 10, for example, to determine whether mobile terminal 10 is traveling in a vehicle. When the user attempts to place an outgoing call, or alternatively receives an incoming call, the present invention may alert the user if the velocity of mobile terminal 10 is at or above a threshold velocity. In this case, the present invention may also enable the hands-free only mode as previously described, thus, permitting the user to communicate only with the use of hands-free device 12. If, however, the velocity is below the threshold velocity, the user could communicate with remote parties with or without the use of hands-free device 12. Network operators, the user, or the manufacturer of mobile terminal 10 may configure the threshold velocity.

In another embodiment, the present invention network 40 may examine the data stored in HLR 48 and/or VLR 50. In this embodiment, network 40 may send control signals via a control channel to mobile terminal 10 whenever mobile terminal 10 registers with the network 40, or alternatively, when mobile terminal 10 is being handed-off to base station 42. In these cases, the control signals could cause controller 34 on mobile terminal 10 to alert the user and/or enable/disable the hands-free only mode as described above. This embodiment may be used, for example, to alert only those users who are traveling outside of their home area.

The present invention may be carried out in other ways than those specifically set forth herein.
The present embodiments are to be considered in all respects as illustrative and not restrictive, and all changes coming within the meaning and equivalency range of the appended claims are intended to be embraced therein.

## Claims

1. A mobile terminal (10) comprising:
a transceiver (24) to transmit signals to and receive signals from a wireless communications network (40);
a hands-free device (12) to allow the user to place and receive calls in a hands-free only mode; and
**characterized by**:
a controller (34) operatively connected to the transceiver (24) and configured to:
determine whether a mobile terminal (10) is proximate a hands-free zone;
indicate to the user whether the mobile terminal (10) is proximate the hands-free zone based an a current location of the mobile terminal (10);
determine a velocity of the mobile terminal (10);
activate the hands-free only mode to permit the user to place and receive calls using the hands-free device (12) if the velocity of the mobile terminal (10) is equal to or exceeds a predetermined threshold velocity while the mobile terminal (10) is proximate the hands-free zone; and
de-activate the hands-free only mode to permit the user to place and receive calls without using the hands-free device (12) if the velocity of the mobile terminal (10) is less than the predetermined threshold velocity while the mobile terminal (10) is proximate the hands-free zone.

2. The mobile terminal of claim 1 further comprising a GPS receiver (28) to provide the current location of the mobile terminal (10).

3. The mobile terminal of claim 1 wherein the wireless communications network (40) is configured to provide the current location of the mobile terminal (10).

4. The mobile terminal of claim 1 wherein the wireless communications network (40) is configured to provide coordinates defining the boundary of the hands-free zone.

5. The mobile terminal of claim 1 wherein the controller (34) is configured to compare the current location of the mobile terminal (10) to a location indicative of the hands-free zone.

6. The mobile terminal of claim 5 further comprising memory (32) to store the location indicative of the hands-free zone.

7. The mobile terminal of claim 1 wherein the controller (34) is further configured to activate the hands-free only mode depending on the proximity of the mobile terminal (10) to the hands-free zone.

8. The mobile terminal of claim 7 wherein the controller (34) is further configured to activate the hands-free only mode responsive to signals received from the wireless communications network (40).

9. The mobile terminal of claim 7 wherein the controller (34) is further configured to activate the hands-free only mode when the mobile terminal (10) enters the hands-free zone.

10. The mobile terminal of claim 7 wherein the controller (34) is further configured to activate the hands-free only mode when a user of mobile terminal (10) places or receives a call.

11. The mobile terminal of claim 1 wherein the controller (34) is further configured to deactivate the hands-free only mode depending an the proximity of the mobile terminal (10) to the hands-free zone.

12. The mobile terminal of claim 11 wherein the controller (34) is further configured to deactivate the hands-free only mode responsive to signals received from the wireless communications network (40).

13. The mobile terminal of claim 11 wherein the controller (34) is further configured to deactivate the hands-free only mode when the mobile terminal (10) leaves the hands-free zone.

14. The mobile terminal of claim 1 wherein the hands-free device (12) comprises a hands-free headset.

15. A wireless communications system comprising:
a base station (42) to communicate within a geographical area identified as being a hands-free zone;
a mobile site controller (46) connected to the base station (42); and
**characterized by**:
a mobile terminal to communicate with the base station (42) in a hands-free only mode based on the proximity of the mobile terminal (10) to the hands-free zone, and on a velocity of the mobile terminal (10), the mobile terminal comprising a controller configured to:
determine whether a mobile terminal (10) is proximate a hands-free zone;
indicate to the user whether the mobile terminal (10) is proximate the hands-free zone based on a current location of the mobile terminal (10);
determine a velocity of the mobile terminal (10);
activate the hands-free only mode to permit the user to place and receive calls using the hands-free device (12) if the velocity of the mobile terminal (10) is equal to or exceeds a predetermined threshold velocity while the mobile terminal (10) is proximate the hands-free zone; and
de-activate the hands-free only mode to permit the user to place and receive calls without using the hands-free device (12) if the velocity of the mobile terminal (10) is less than the predetermined threshold velocity while the mobile terminal (10) is proximate the hands-free zone.

16. The system of claim 15 further comprising a location server (52) connected to the base station (42) to provide the current location of the mobile terminal (10).

17. The system of claim 16 wherein the location server (52) is further configured to provide a location of the hands-free zone to the mobile terminal (10).

18. The system of claim 15 wherein the mobile terminal (10) comprises a GPS receiver (28) to provide the current location of the mobile terminal (10).

19. The system of claim 15 wherein the controller (24) is further configured to compare the current location of the mobile terminal (10) to a location indicative of the hands-free zone.

20. The system of claim 15 wherein the controller (24) is further configured to activate the hands-free only mode responsive to signals received from the Base station (42).

21. The system of claim 15 wherein the controller (24) is further configured to activate the hands-free only mode when the mobile terminal (10) enters the hands-free zone.

22. The system of claim 15 wherein the controller (34) is further configured to deactivate the hands-free only mode responsive to signals received from the base station (42).

23. The system of claim 15 wherein the controller (34) is further configured to deactivate the hands-free only mode when the mobile terminal (10) leaves the hands-free zone.

24. The system of claim 20 wherein the controller (34) is further configured to activate the hands-free only mode when the mobile terminal (10) registers with the base Station (42).

25. The system of claim 20 wherein the controller (34) is further configured to activate the hands-free only mode upon hand-off of the mobile terminal (10) to the base station (42).

26. A method of controlling a mobile terminal (10) operating in a wireless communications network (40), the method **characterized by**:
determining a current location of a mobile terminal (10);
indicating to a user whether the mobile terminal (10) is proximate a hands-free zone based on the current location of the mobile terminal (10) and a location indicative of the hands-free zone,
determining a velocity of the mobile terminal (10) ;
activating a hands-free only mode of the mobile terminal (10) if the velocity of the mobile terminal (10) is equal to or exceeds a predetermined threshold velocity while the mobile terminal (10) is proximate the hands-free zone; and
deactivating the hands-free only mode of the mobile terminal (10) if the velocity of the mobile terminal (10) is less than the predetermined threshold velocity while the mobile terminal (10) is proximate the hands-free zone.

27. The method of claim 26 wherein the mobile terminal (10) computes the current location responsive to location signals received over a GPS receiver (28).

28. The method of claim 26 further comprising the mobile terminal (10) receiving the current location from a base station (42) in the wireless communications network (40).

29. The method of claim 26 further comprising determining the proximity of the current location of the mobile terminal (10) to the location indicative of the hands-free zone.

30. The method of claim 29 further comprising comparing the current location of the mobile terminal (10) to the location indicative of the hands-free zone.

31. The method of claim 26 further comprising determining a distance of the mobile terminal (10) from the location indicative of the hands-free zone, and indicating whether the mobile terminal (10) is proximate the hands-free zone based on the distance.

32. The method of claim 26 further comprising determining a direction of travel of the mobile terminal (10), and indicating whether the mobile terminal (10) is proximate the hands-free zone based on the direction of travel.

33. The method of claim 26 further comprising indicating whether the mobile terminal (10) is proximate the hands-free zone based on the velocity of the mobile terminal.

34. The method of claim 26 wherein indicating the proximity of the mobile terminal (10) to the hands-free zone comprises rendering an audible sound over a speaker (18) of the mobile terminal (10).

35. The method of claim 26 wherein indicating the proximity of the mobile terminal (10) to the hands-free zone comprises displaying a text message over a display (16) of the mobile terminal (10).

36. The method of claim 26 wherein indicating the proximity of the mobile terminal (10) to the hands-free zone comprises activating a visual indicator on the mobile terminal (10).

37. The method of claim 26 further comprising activating the hands-free only mode when the mobile terminal (10) enters the hands-free zone.

38. The method of claim 37 further comprising deactivating the hands-free only mode when the mobile terminal (10) leaves the hands-free zone.

## Patentansprüche

1. Mobilendgerät (10) mit:
einem Transceiver (24) zum Übertragen von Signalen an ein Drahtloskommunikationsnetzwerk (40) und zum Empfangen von Signalen von diesem;
einer Freisprechvorrichtung (12), um dem Benutzer zu ermöglichen, Anrufe in einem Nur-Freisprechmodus zu platzieren und zu empfangen; und
**gekennzeichnet durch**:
eine Steuereinheit (34), die wirksam mit dem Transceiver (24) verbunden ist und konfiguriert ist zum:
Bestimmen, ob ein Mobilendgerät (10) benachbart zu einer Freisprechzone ist;
dem Benutzer Angeben, ob das Mobilendgerät (10) benachbart zu der Freisprechzone ist, auf der Grundlage eines aktuellen Ortes eines Mobilendgerätes (10);
Bestimmen einer Geschwindigkeit des Mobilendgerätes (10) ;
Aktivieren des Nur-Freisprechmodus, um dem Benutzer zu erlauben, Anrufe mit Verwendung der Freisprechvorrichtung (12) zu platzieren und zu empfangen, wenn die Geschwindigkeit des Mobilendgerätes (10) gleich einer vorbestimmten Schwellengeschwindigkeit ist oder diese überschreitet, während das Mobilendgerät (10) benachbart zu der Freisprechzone ist; und
Deaktivieren des Nur-Freisprechmodus, um dem Benutzer zu erlauben, Anrufe ohne Verwendung der Freisprechvorrichtung (12) zu platzieren und zu empfangen, wenn die Geschwindigkeit des Mobilendgerätes (10) geringer als die vorbestimmte Schwellengeschwindigkeit ist, während das Mobilendgerät (10) benachbart zu der Freisprechzone ist.

2. Mobilendgerät gemäß Anspruch 1, mit ferner einem GPS-Empfänger (28) zum Bereitstellen des aktuellen Ortes des Mobilendgerätes (10).

3. Mobilendgerät gemäß Anspruch 1, wobei das Drahtloskommunikationsnetzwerk (40) konfiguriert ist zum Bereitstellen des aktuellen Ortes des Mobilendgerätes (10).

4. Mobilendgerät gemäß Anspruch 1, wobei das Drahtloskommunikationsnetzwerk (40) konfiguriert ist zum Bereitstellen von die Grenze der Freisprechzone definierenden Koordinaten.

5. Mobilendgerät gemäß Anspruch 1, wobei die Steuereinheit (34) konfiguriert ist zum Vergleichen des aktuellen Ortes des Mobilendgerätes (10) mit einem die Freisprechzone angebenden Ort.

6. Mobilendgerät gemäß Anspruch 5, mit ferner einem Speicher (32) zum Speichern des die Freisprechzone angebenden Ortes.

7. Mobilendgerät gemäß Anspruch 1, wobei die Steuereinheit (34) ferner konfiguriert ist zum Aktivieren des Nur-Freisprechmodus in Abhängigkeit von der Nähe des Mobilendgerätes (10) zu der Freisprechzone.

8. Mobilendgerät gemäß Anspruch 7, wobei die Steuereinheit (34) ferner konfiguriert ist zum Aktivieren des Nur-Freisprechmodus in Ansprechen auf von dem Drahtloskommunikationsnetzwerk (40) empfangene Signale.

9. Mobilendgerät gemäß Anspruch 7, wobei die Steuereinheit (34) ferner konfiguriert ist zum Aktivieren des Nur-Freisprechmodus, wenn das Mobilendgerät (10) die Freisprechzone betritt.

10. Mobilendgerät gemäß Anspruch 7, wobei die Steuereinheit (34) ferner konfiguriert ist zum Aktivieren des Nur-Freisprechmodus, wenn ein Benutzer eines Mobilendgerätes (10) einen Anruf platziert oder empfängt.

11. Mobilendgerät gemäß Anspruch 1, wobei die Steuereinheit (34) ferner konfiguriert ist zum Deaktivieren des Nur-Freisprechmodus in Abhängigkeit von der Nähe des Mobilendgerätes (10) zu der Freisprechzone.

12. Mobilendgerät gemäß Anspruch 11, wobei die Steuereinheit (34) ferner konfiguriert ist zum Deaktivieren des Nur-Freisprechmodus in Ansprechen auf von dem Drahtloskommunikationsnetzwerk (40) empfangene Signale.

13. Mobilendgerät gemäß Anspruch 11, wobei die Steuereinheit (34) ferner konfiguriert ist zum Deaktivieren des Nur-Freisprechmodus, wenn das Mobilendgerät (10) die Freisprechzone verlässt.

14. Mobilendgerät gemäß Anspruch 1, wobei die Freisprechvorrichtung (12) ein Freisprech-Headset umfasst.

15. Drahtloskommunikationssystem mit:
einer Basisstation (42) zum Kommunizieren innerhalb eines geographischen Gebietes, das als eine Freisprechzone identifiziert wird;
einer Mobilstandort-Steuereinheit (46), die mit der Basisstation (42) verbunden ist; und
**gekennzeichnet durch**:
ein Mobilendgerät zum Kommunizieren mit der Basisstation (42) in einem Nur-Freisprechmodus auf der Grundlage der Nähe des Mobilendgerätes (10) zu der Freisprechzone und einer Geschwindigkeit des Mobilendgerätes (10), wobei das Mobilendgerät eine Steuereinheit umfasst, die konfiguriert ist zum:
Bestimmen, ob ein Mobilendgerät (10) benachbart zu einer Freisprechzone ist;
dem Benutzer Angeben, ob das Mobilendgerät (10) benachbart zu der Freisprechzone ist, auf der Grundlage eines aktuellen Ortes eines Mobilendgerätes (10);
Bestimmen einer Geschwindigkeit des Mobilendgerätes (10) ;
Aktivieren des Nur-Freisprechmodus, um dem Benutzer zu erlauben, Anrufe mit Verwendung der Freisprechvorrichtung (12) zu platzieren und zu empfangen, wenn die Geschwindigkeit des Mobilendgerätes (10) gleich einer vorbestimmten Schwellengeschwindigkeit ist oder diese überschreitet, während das Mobilendgerät (10) benachbart zu der Freisprechzone ist; und
Deaktivieren des Nur-Freisprechmodus, um dem Benutzer zu erlauben, Anrufe ohne Verwendung der Freisprechvorrichtung (12) zu platzieren und zu empfangen, wenn die Geschwindigkeit des Mobilendgerätes (10) geringer als die vorbestimmte Schwellengeschwindigkeit ist, während das Mobilendgerät (10) benachbart zu der Freisprechzone ist.

16. System gemäß Anspruch 15, mit ferner einem Ortsserver (52), der mit der Basisstation (42) verbunden ist, um den aktuellen Ort des Mobilendgerätes (10) bereitzustellen.

17. System gemäß Anspruch 16, wobei der Ortsserver (52) ferner konfiguriert ist, einen Ort der Freisprechzone dem Mobilendgerät (10) bereitzustellen.

18. System gemäß Anspruch 15, wobei das Mobilendgerät (10) einen GPS-Empfänger (28) zum Bereitstellen des aktuellen Ortes des Mobilendgerätes (10) umfasst.

19. System gemäß Anspruch 15, wobei die Steuereinheit (24) ferner konfiguriert ist zum Vergleichen des aktuellen Ortes des Mobilendgerätes (10) mit einem die Freisprechzone angebenden Ort.

20. System gemäß Anspruch 15, wobei die Steuereinheit (24) ferner konfiguriert ist zum Aktivieren des Nur-Freisprechmodus in Ansprechen auf von der Basisstation (42) empfangene Signale.

21. System gemäß Anspruch 15, wobei die Steuereinheit (24) ferner konfiguriert ist zum Aktivieren des Nur-Freisprechmodus, wenn das Mobilendgerät (10) die Freisprechzone betritt.

22. System gemäß Anspruch 15, wobei die Steuereinheit (34) ferner konfiguriert ist zum Deaktivieren des Nur-Freisprechmodus in Ansprechen auf von der Basisstation (42) empfangene Signale.

23. System gemäß Anspruch 15, wobei die Steuereinheit (34) ferner konfiguriert ist zum Deaktivieren des Nur-Freisprechmodus, wenn das Mobilendgerät (10) die Freisprechzone verlässt.

24. System gemäß Anspruch 20, wobei die Steuereinheit (34) ferner konfiguriert ist zum Aktivieren des Nur-Freisprechmodus, wenn das Mobilendgerät (10) sich bei der Basisstation (42) anmeldet.

25. System gemäß Anspruch 20, wobei die Steuereinheit (34) ferner konfiguriert ist zum Aktivieren des Nur-Freisprechmodus beim Hand-off des Mobilendgerätes (10) an die Basisstation (42).

26. Verfahren zum Steuern eines Mobilendgerätes (10), das in einem Drahtloskommunikationsnetzwerk (40) arbeitet, wobei das Verfahren **gekennzeichnet ist durch**:
Bestimmen eines aktuellen Ortes eines Mobilendgerätes (10) ;
einem Benutzer Angeben, ob das Mobilendgerät (10) benachbart zu einer Freisprechzone ist, auf der Grundlage des aktuellen Ortes des Mobilendgerätes (10) und eines die Freisprechzone angebenden Ortes,
Bestimmen einer Geschwindigkeit des Mobilendgerätes (10) ;
Aktivieren eines Nur-Freisprechmodus des Mobilendgerätes (10), wenn die Geschwindigkeit des Mobilendgerätes (10) gleich einer vorbestimmten Schwellengeschwindigkeit ist oder diese überschreitet, während das Mobilendgerät (10) benachbart zu der Freisprechzone ist; und
Deaktivieren des Nur-Freisprechmodus des Mobilendgerätes (10), wenn die Geschwindigkeit des Mobilendgerätes (10) kleiner als die vorbestimmte Schwellengeschwindigkeit ist, während das Mobilendgerät (10) benachbart zu der Freisprechzone ist.

27. Verfahren gemäß Anspruch 26, wobei das Mobilendgerät (10) den aktuellen Ort in Ansprechen auf über einen GPS-Empfänger (28) empfangene Ortssignale berechnet.

28. Verfahren gemäß Anspruch 26, wobei das Mobilendgerät (10) ferner den aktuellen Ort von einer Basisstation (42) in dem Drahtloskommunikationsnetzwerk (40) empfängt.

29. Verfahren gemäß Anspruch 26, mit ferner einem Bestimmen der Nähe des aktuellen Ortes des Mobilendgerätes (10) zu dem die Freisprechzone angebenden Ort.

30. Verfahren gemäß Anspruch 29, mit ferner einem Vergleichen des aktuellen Ortes des Mobilendgerätes (10) mit dem die Freisprechzone angebenden Ort.

31. Verfahren gemäß Anspruch 26, mit ferner einem Bestimmen der Distanz des Mobilendgerätes (10) von dem die Freisprechzone angebenden Ort, und einem Angeben, ob das Mobilendgerät (10) benachbart zu der Freisprechzone ist, auf Grundlage der Distanz.

32. Verfahren gemäß Anspruch 26, mit ferner einem Bestimmen einer Reiserichtung des Mobilendgerätes (10), und einem Angeben, ob das Mobilendgerät (10) benachbart zu der Freisprechzone ist, auf der Grundlage der Reiserichtung.

33. Verfahren gemäß Anspruch 26, mit ferner einem Angeben, ob das Mobilendgerät (10) benachbart zu der Freisprechzone ist, auf der Grundlage der Geschwindigkeit des Mobilendgerätes.

34. Verfahren gemäß Anspruch 26, wobei das Angeben der Nähe des Mobilendgerätes (10) zu der Freisprechzone ein Wiedergeben eines hörbaren Lautes über einen Lautsprecher (18) des Mobilendgerätes (10) umfasst.

35. Verfahren gemäß Anspruch 26, wobei das Angeben der Nähe des Mobilendgerätes (10) zu der Freisprechzone ein Anzeigen einer Textnachricht mittels einer Anzeige (16) des Mobilendgerätes (10) umfasst.

36. Verfahren gemäß Anspruch 26, wobei das Angeben der Nähe des Mobilendgerätes (10) zu der Freisprechzone ein Aktivieren eines visuellen Indikators auf dem Mobilendgerät (10) umfasst.

37. Verfahren gemäß Anspruch 26, mit ferner einem Aktivieren des Nur-Freisprechmodus, wenn das Mobilendgerät (10) die Freisprechzone betritt.

38. Verfahren gemäß Anspruch 37, mit ferner einem Deaktivieren des Nur-Freisprechmodus, wenn das Mobilendgerät (10) die Freisprechzone verlässt.

## Revendications

1. Terminal mobile (10) comprenant :
un émetteur-récepteur (24) pour émettre des signaux vers un réseau de communication sans fil (40) et en recevoir des signaux ;
un dispositif mains libres (12) pour permettre à l'utilisateur de placer et de recevoir des appels dans un mode « mains libres seulement » ; et
**caractérisé par** :
un dispositif de commande (34) relié fonctionnellement à l'émetteur-récepteur (24) et configuré pour :
déterminer si, oui ou non, un terminal mobile (10) se trouve à proximité d'une zone mains libres ;
indiquer à l'utilisateur si, oui ou non, le terminal mobile (10) se trouve à proximité de la zone mains libres en se basant sur un emplacement courant du terminal mobile (10) ;
déterminer une vitesse du terminal mobile (10) ;
activer le mode « mains libres seulement » pour permettre à l'utilisateur de placer et de recevoir des appels à l'aide du dispositif mains libres (12) si la vitesse du terminal mobile (10) est supérieure ou égale à une vitesse de seuil prédéterminée pendant que le terminal mobile (10) se trouve à proximité de la zone mains libres ; et
désactiver le mode « mains libres seulement » pour permettre à l'utilisateur de placer et de recevoir des appels sans utiliser le dispositif mains libres (12) si la vitesse du terminal mobile (10) est inférieure à la vitesse de seuil prédéterminée pendant que le terminal mobile (10) se trouve à proximité de la zone mains libres.

2. Terminal mobile selon la revendication 1 comprenant en outre un récepteur GPS (28) pour fournir l'emplacement courant du terminal mobile (10).

3. Terminal mobile selon la revendication 1 dans lequel le réseau de communication sans fil (40) est configuré pour fournir l'emplacement courant du terminal mobile (10).

4. Terminal mobile selon la revendication 1 dans lequel le réseau de communication sans fil (40) est configuré pour fournir les coordonnées définissant la frontière de la zone mains libres.

5. Terminal mobile selon la revendication 1 dans lequel le dispositif de commande (34) est configuré pour comparer l'emplacement courant du terminal mobile (10) à un emplacement indicateur de la zone mains libres.

6. Terminal mobile selon la revendication 5 comprenant en outre une mémoire (32) pour stocker l'emplacement indicateur de la zone mains libres.

7. Terminal mobile selon la revendication 1 dans lequel le dispositif de commande (34) est en outre configuré pour activer le mode « mains libres seulement » en fonction de la proximité du terminal mobile (10) par rapport à la zone mains libres.

8. Terminal mobile selon la revendication 7 dans lequel le dispositif de commande (34) est en outre configuré pour activer le mode « mains libres seulement » en réponse à des signaux reçus du réseau de communication sans fil (40).

9. Terminal mobile selon la revendication 7 dans lequel le dispositif de commande (34) est en outre configuré pour activer le mode « mains libres seulement » lorsque le terminal mobile (10) pénètre dans la zone mains libres.

10. Terminal mobile selon la revendication 7 dans lequel le dispositif de commande (34) est en outre configuré pour activer le mode « mains libres seulement » lorsqu'un utilisateur du terminal mobile (10) place ou reçoit un appel.

11. Terminal mobile selon la revendication 1 dans lequel le dispositif de commande (34) est en outre configuré pour désactiver le mode « mains libres seulement » en fonction de la proximité du terminal mobile (10) par rapport à la zone mains libres.

12. Terminal mobile selon la revendication 11 dans lequel le dispositif de commande (34) est en outre configuré pour désactiver le mode « mains libres seulement » en réponse à des signaux reçus du réseau de communication sans fil (40).

13. Terminal mobile selon la revendication 11 dans lequel le dispositif de commande (34) est en outre configuré pour désactiver le mode « mains libres seulement » lorsque le terminal mobile (10) quitte la zone mains libres.

14. Terminal mobile selon la revendication 1 dans lequel le dispositif mains libres (12) comprend un casque d'écoute mains libres.

15. Système de communication sans fil comprenant:
une station de base (42) pour communiquer dans une zone géographique identifiée comme étant une zone mains libres ;
un dispositif de commande de site mobile (46) relié à la station de base (42) ; et **caractérisé par** :
un terminal mobile pour communiquer avec la station de base (42) dans un mode « mains libres seulement » en se basant sur la proximité du terminal mobile (10) par rapport à la zone mains libres et sur une vitesse du terminal mobile (10), le terminal mobile comprenant un dispositif de commande configuré pour :
déterminer si, oui ou non, un terminal mobile (10) se trouve à proximité d'une zone mains libres ;
indiquer à l'utilisateur si, oui ou non, le terminal mobile (10) est à proximité de la zone mains libres en se basant sur un emplacement courant du terminal mobile (10)
déterminer une vitesse du terminal mobile (10) ;
activer le mode « mains libres seulement » pour permettre à l'utilisateur de placer et de recevoir des appels à l'aide du dispositif mains libres (12) si la vitesse du terminal mobile (10) est supérieure ou égale à une vitesse de seuil prédéterminée pendant que le terminal mobile (10) se trouve à proximité de la zone mains libres ; et
désactiver le mode « mains libres seulement » pour permettre à l'utilisateur de placer et de recevoir des appels sans utiliser le dispositif mains libres (12) si la vitesse du terminal mobile (10) est inférieure à la vitesse de seuil prédéterminée pendant que le terminal mobile (10) se trouve à proximité de la zone mains libres.

16. Système selon la revendication 15 comprenant en outre un serveur de localisation (52) relié à la station de base (42) pour fournir l'emplacement courant du terminal mobile (10).

17. Système selon la revendication 16 dans lequel le serveur de localisation (52) est en outre configuré pour fournir un emplacement de la zone mains libres au terminal mobile (10).

18. Système selon la revendication 15 dans lequel le terminal mobile (10) comprend un récepteur GPS (28) pour fournir l'emplacement courant du terminal mobile (10)

19. Système selon la revendication 15 dans lequel le dispositif de commande (24) est en outre configuré pour comparer l'emplacement courant du terminal mobile (10) à un emplacement indicateur de la zone mains libres.

20. Système selon la revendication 15 dans lequel le dispositif de commande (24) est en outre configuré pour activer le mode « mains libres seulement » en réponse à des signaux reçus de la station de base (42).

21. Système selon la revendication 15 dans lequel le dispositif de commande (24) est en outre configuré pour activer le mode « mains libres seulement » lorsque le terminal mobile (10) pénètre dans la zone mains libres.

22. Système selon la revendication 15 dans lequel le dispositif de commande (34) est en outre configuré pour désactiver le mode « mains libres seulement » en réponse à des signaux reçus de la station de base (42).

23. Système selon la revendication 15 dans lequel le dispositif de commande (34) est en outre configuré pour désactiver le mode « mains libres seulement » lorsque le terminal mobile (10) quitte la zone mains libres.

24. Système selon la revendication 20 dans lequel le dispositif de commande (34) est en outre configuré pour activer le mode « mains libres seulement » lorsque le terminal mobile (10) s'enregistre auprès de la station de base (42).

25. Système selon la revendication 20 dans lequel le dispositif de commande (34) est en outre configuré pour activer le mode « mains libres seulement » sur transfert du terminal mobile (10) à la station de base (42).

26. Procédé de commande d'un terminal mobile (10) fonctionnant dans un réseau de communication sans fil (40), le procédé étant **caractérisé par** les étapes consistant à :
déterminer un emplacement courant d'un terminal mobile (10) ;
indiquer à un utilisateur si, oui ou non, le terminal mobile (10) se trouve à proximité d'une zone mains libres en se basant sur l'emplacement courant du terminal mobile (10) et un emplacement indicateur de la zone mains libres,
déterminer une vitesse du terminal mobile (10) ;
activer un mode « mains libres seulement » du terminal mobile (10) si la vitesse du terminal mobile (10) est supérieure ou égale à une vitesse de seuil prédéterminée pendant que le terminal mobile (10) se trouve à proximité de la zone mains libres ; et
désactiver le mode « mains libres seulement » du terminal mobile (10) si la vitesse du terminal mobile (10) est inférieure à la vitesse de seuil prédéterminée pendant que le terminal mobile (10) se trouve à proximité de la zone mains libres ;

27. Procédé selon la revendication 26, dans lequel le terminal mobile (10) calcule l'emplacement courant en réponse à des signaux de localisation reçus sur un récepteur GPS (28).

28. Procédé selon la revendication 26 comprenant en outre l'étape dans laquelle le terminal mobile (10) reçoit l'emplacement courant de la part d'une station de base (42) dans le réseau de communication sans fil (40).

29. Procédé selon la revendication 26 comprenant en outre l'étape consistant à déterminer la proximité de l'emplacement courant du terminal mobile (10) par rapport à l'emplacement indicateur de la zone mains libres.

30. Procédé selon la revendication 29 comprenant en outre l'étape consistant à comparer l'emplacement courant du terminal mobile (10) à l'emplacement indicateur de la zone mains libres.

31. Procédé selon la revendication 26 comprenant en outre les étapes consistant à déterminer une distance du terminal mobile (10) par rapport à l'emplacement indicateur de la zone mains libres, et indiquer si, oui ou non, le terminal mobile (10) se trouve à proximité de la zone mains libres en se basant sur la distance

32. Procédé selon la revendication 26 comprenant en outre les étapes consistant à déterminer une direction de déplacement du terminal mobile (10), et indiquer si, oui ou non, le terminal mobile (10) se trouve à proximité de la zone mains libres en se basant sur la direction de déplacement.

33. Procédé selon la revendication 26 comprenant en outre l'étape consistant à indiquer si, oui ou non, le terminal mobile (10) se trouve à proximité de la zone mains libres en se basant sur la vitesse du terminal mobile.

34. Procédé selon la revendication 26 dans lequel l'étape consistant à indiquer la proximité du terminal mobile (10) par rapport à la zone mains libres comprend de faire retentir un son audible sur un haut-parleur (18) du terminal mobile (10).

35. Procédé selon la revendication 26 dans lequel l'étape consistant à indiquer la proximité du terminal mobile (10) par rapport à la zone mains libres comprend d'afficher un message textuel sur un afficheur (16) du terminal mobile (10).

36. Procédé selon la revendication 26 dans lequel l'étape consistant à indiquer la proximité du terminal mobile (10) par rapport à la zone mains libres comprend d'activer un indicateur visuel sur le terminal mobile (10).

37. Procédé selon 1a revendication 26 comprenant en outre l'étape consistant à activer le mode « mains libres seulement » lorsque le terminal mobile (10) pénètre dans la zone mains libres.

38. Procédé selon la revendication 37 comprenant en outre l'étape consistant à désactiver le mode « mains libres seulement » lorsque le terminal mobile (10) quitte la zone mains libres.
